# EUROPÄISCHE PATENTANMELDUNG

(11) **EP 0 648 420 A2**
(43) Veröffentlichungstag der Anmeldung: **19.04.1995**
(21) Anmeldenummer: 94115139.1
(22) Anmeldetag: 26.09.1994
(51) Int. Cl.: A21B 1/40, A21B 3/04

(54) **Ofen zum Backen von Brot**

(30) Priorität: 18.10.1993 DE 4335476
(71) Anmelder: LUDWIG STOCKER HOFPFISTEREI GMBH, D-80335 München (DE)
(72) Erfinder: Leis, Ulrich, D-81737 München (DE); Kuhn, Herbert, D-81737 München (DE); Münzer, Thomas, D-81667 München (DE); Stocker, Siegfried, D-82057 Icking/Isartal (DE); Mayer, Jürgen, D-82205 Gilching (DE); Manhart, Hugo, D-80339 München (DE)
(74) Vertreter: Fincke, Karl Theodor, Dipl.-Phys. Dr.

(57) **Zusammenfassung**

Die Erfindung betrifft einen Ofen zum Backen von Brot mit wenigstens einem Backraum (98), dadurch gekennzeichnet, daß sich in dem Backraum (98) wenigstens ein Temperaturfühler (100, 102, 104, 108) und ein Feuchtigkeitsfühler (106) befinden, die die Temperatur im Backraum (98) und die Konzentration von Feuchtigkeit im Backraum (98) steuern.

## Beschreibung

Die Erfindung betrifft einen Ofen zum Backen von Brot mit wenigstens einem Backraum.

Für den Backvorgang sind maßgeblich die Temperatur im Backraum und auch die Feuchtigkeit im Backraum. Um die Temperatur und die Feuchtigkeit im Backraum steuern zu können, ist der Ofen dadurch gekennzeichnet, daß sich in dem Backraum wenigstens ein Temperaturfühler und ein Feuchtigkeitsfühler befinden, die die Temperatur im Backraum und die Konzentration von Feuchtigkeit im Backraum steuern.

Bei Verwendung einer solchen Steuerung hat es sich als besonders zweckmäßig erwiesen, daß die Steuerung der Temperatur und der Konzentration der Feuchtigkeit unabhängig voneinander erfolgt. Dem widerspricht nicht, daß es auch vorteilhaft sein kann, die Steuerung der Temperatur und der Konzentration der Feuchtigkeit bei Bedarf miteinander zu koppeln.

Eine besonders feine Steuerung der Temperatur im Ofenraum erhält man dadurch, daß an die Bodenwand, die Seitenwände und die Deckwand unabhängig voneinander arbeitende Temperaturfühler angesetzt sind.

Um den Backraum an unterschiedliche Backbedingungen, insbesondere an unterschiedliche Brotsorten, anpassen zu können, ist der Ofen mit wenigstens einem durch eine Bodenwand, Seitenwände und eine Deckwand begrenzten Backraum versehen, wobei die Deckwand höhenverstellbar ist.

Vorteilhaft ist es, wenn aus diesem Backraum der Dampf nicht unkontrolliert entweicht. Bevorzugt ist daher die Deckwand gegenüber den Seitenwänden abgedichtet. Diese Maßnahme ist für sich von selbständiger Bedeutung.

Sind die Seitenwände mit stark unebenen Steinplatten bekleidet oder ist die Deckwand aus irgendwelchen anderen Gründen gegenüber den Seitenwänden nicht abdichtbar, ist bevorzugt die Deckwand mittels zur Höhenverstellung von den Seitenwänden abhebbaren Dichtungen abgedichtet.

Eine Raumersparnis erzielt man, ohne die genannten Vorteile des Ofens zu verlieren, wenn der Ofen dadurch gekennzeichnet ist, daß er wenigstens zwei übereinander angeordnete, thermisch - vorzugsweise durch Calciumsilikat-Isolierplatten - voneinander entkoppelte Backräume aufweist.

Eine noch weitergehendere Anpassung an das Backen unterschiedlicher Brotteiglinge erhält man dadurch, daß die Bodenwand, die Seitenwände und die Deckwand unabhängig voneinander - vorzugsweise durch Thermoöl - erhitzbar sind. Diese Maßnahme ist für sich von selbständiger Bedeutung.

Die wärmestrahlenden Flächen im Backraum sind von besonderer Bedeutung für Art und Güte der zu backenden Brote. Bevorzugt ist der Ofen dadurch gekennzeichnet, daß seine Bodenwand und/oder wenigstens untere Bereiche seiner Seitenwände und/oder seine Deckwand mit Belägen aus Stein und/oder Oxidkeramik versehen sind. Diese Maßnahme ist für sich von selbständiger Bedeutung.

Um auch in einem solchen Fall den Ofen anpassungsfähig zu machen, ist er bevorzugt dadurch gekennzeichnet, daß wenigstens einer der Beläge an der ihm zugeordneten Wand austauschbar befestigt ist.

Ein Verfahren zum Backen von Brot in einem Backraum, insbesondere in einem Ofen genannter Art, das sich besonders bewährt hat, ist dadurch gekennzeichnet, daß der Backraum auf eine Temperatur (z.B. 300°C) erhitzt wird, die oberhalb der Backtemperatur (z.B. 200°C) liegt, daß dann in den Backraum wenigstens ein nicht vorgebackener Brotteigling eingebracht wird und daß dann nach einer vorgegebenen Zeitspanne (z.B. 5 min) die Temperatur des Backraums auf die Backtemperatur abgesenkt wird. Dieses Verfahren hat eine selbständige Bedeutung, ist also nicht an den beschriebenen Ofen und die beschriebene Steuerung gebunden, gleichwenn eine solche Bindung auch vorteilhaft ist.

Die Erfindung wird im folgenden an einem Ausführungsbeispiel unter Hinweis auf die beigefügten Zeichnungen beschrieben.

Fig. 1 zeigt die wesentlichen Bauteile eines Ofens mit einem Ofenraum in schematischer Perspektive.

Fig. 2 zeigt die Abdichtung der Deckwand des Ofenraums heim Ofen nach Fig. 1 gegenüber einer Seitenwand.

Fig. 3 zeigt einen Ofen mit zwei Übereinander angeordneten Ofenräumen in schematischer Perspektive.

Fig. 4 zeigt die Befestigung einer Steinplatte an einer Ofenwand.

Fig. 5 zeigt eine Steuerung eines Ofenraums.

Fig. 6 zeigt in einem schematischen Temperatur-Zeit-Diagramm einen Temperaturverlauf im Ofenraum beim Backen von Brot.

Der Ofen nach dem Ausführungsbeispiel weist eine Bodenwand 2, Seitenwände 4, 6, 8, 10 und eine höhenverstellbare Deckwand 12 auf.

Oberhalb der Bodenwand 2 befindet sich in der Seitenwand 10 eine Öffnung 14 zum Einführen von Brotteiglingen in den Backraum und zum Abführen gebackener Brote aus dem Backraum.

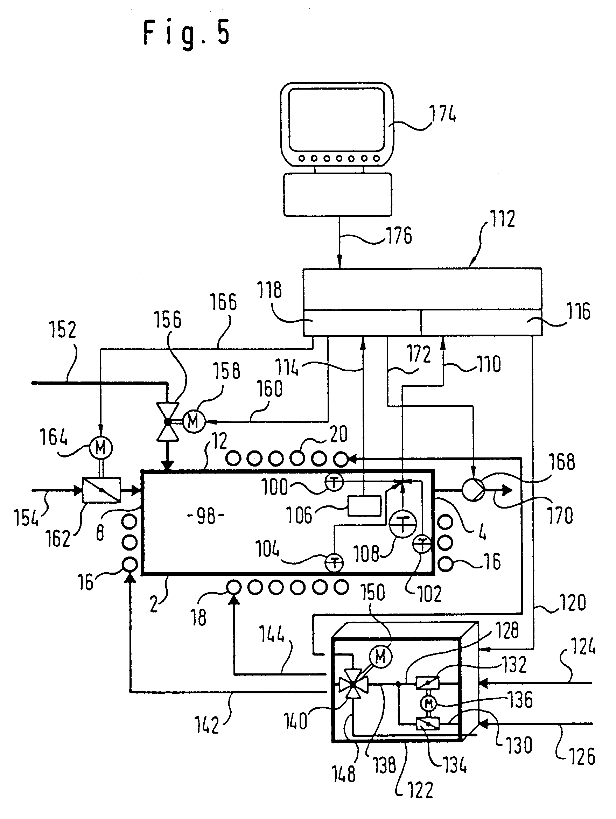

Die Bodenwand 2, die unteren Teile der Querseitenwände 4, 8 und die Deckwand 12 sind mit Thermoöl geheizt, das Leitungen 16, 18, 20 (vgl. Fig. 5) in den Wänden 2, 4, 8, 12 durchströmt. Die Bodenwand 2 befindet sich auf zwei Trägern 22, 24, die beidseitig der Öffnung 14 über die Bodenwand 2 hinausragen und vertikale Zylinder 26 abstützen, aus denen oben Kolbenstangen 28 herausragen. Die Kolbenstangen 28 stützen mit ihren oberen Enden Träger 30, 32 ab, die durch an ihrer Unterseite angesetzte Querstützen 33 miteinander verbunden sind. Eine Höhenverstellung der Kolbenstangen 28 erfolgt mit Drucköl, das in die Zylinder 26 eingeführt oder aus den Zylindern 26 abgeführt wird.

An die Unterseite der Träger 30, 32 sind Tragstangen 34 angesetzt, die an der Oberseite der Deckwand 12 mittels Befestigungsgliedern 36 befestigt sind.

Durch Einführung von Druckmittel in die Zylinder bzw. durch Abführung von Druckmittel aus den Zylindern ist somit die Deckwand höhenverstellbar.

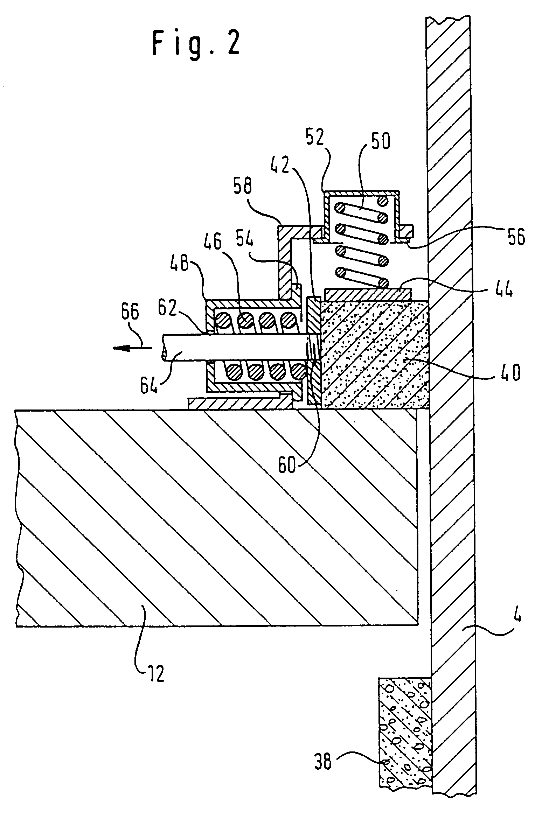

Fig. 2 zeigt eine Seitenwand 4, die in ihrem unteren Bereich innenseitig mit einer Steinplatte 38 belegt ist. Am oberen Rand der Deckwand 12 befindet sich als Dichtungselement eine Graphitpackung 40, die unter der Wirkung von zwei Druckplatten 42 und 44 steht. Die Druckplatte 42 steht unter dem Druck einer Schraubenfeder 46, die in einem Gehäuse 48 abgestützt ist. Die Druckplatte 44 steht unter dem Druck einer Schraubenfeder 50, die in einem Gehäuse 52 abgestützt ist. Beide Gehäuse 48, 52 weisen Randflansche 54 bzw. 56 auf, die in Löchern in einem an die Dechwand 12 angesetzten Winkelstück 58 abgestützt sind. Die Druckplatte 42 weist ein Loch 60 auf, in dem eine durch ein Loch 62 im Gehäuse 48 ragende Stange 64 befestigt ist. Durch Ziehen an der Stange 64 in Richtung des Pfeils 66 kann man die Druckplatte 42 von der Graphitpackung 40 lösen und dann ohne erheblichen Reibwiderstand die Höhe der Deckwand 12 verstellen. Die Seitenwand 4 oberhalb der Steinplatte 38 bildet somit einen Führungsrahmen.

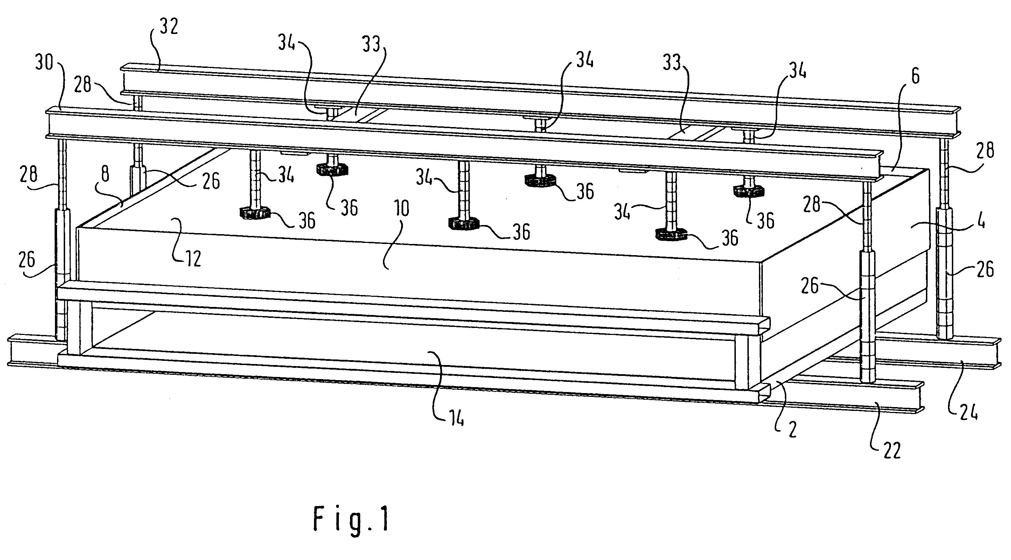

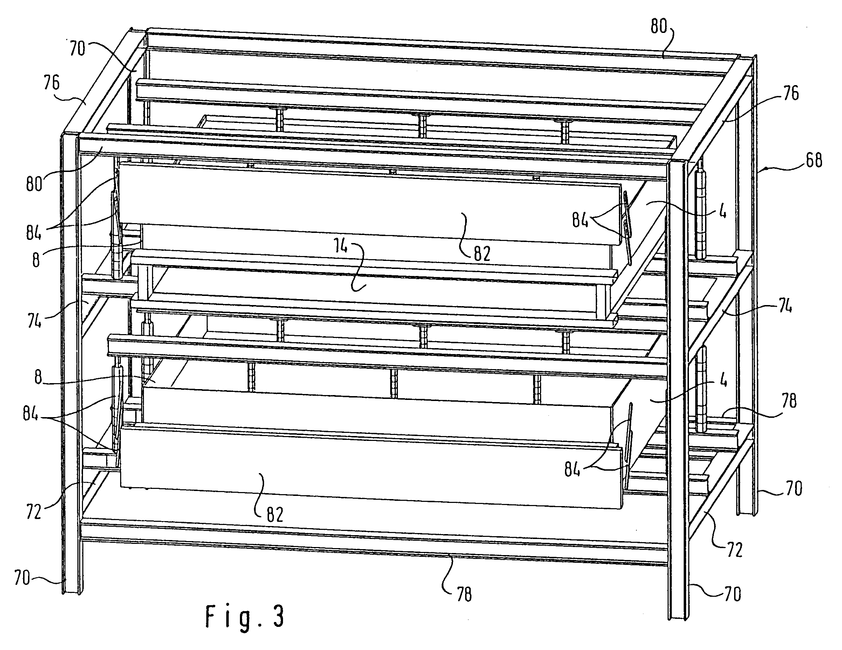

Fig. 3 zeigt zwei übereinander in einem Gestell 68 angeordnete Öfen nach Fig. 1. Das Gestell 68 weist vier vertikale Träger 70 auf, die unten durch Querträger 72 zur Abstützung des unteren Ofens, in der Mitte durch Querträger 74 zur Abstützung des oberen Ofens und oben durch Querträger 76 zur gegenseitigen Abstützung miteinander verbunden sind. Ebenfalls der gegenseitigen Abstützung dienen untere Längsträger 78 und obere Längsträger 80. Den Öffnungen 14 der beiden Öfen sind Klappen 82 zugeordnet, die an Parallellenkern 84 angelenkt sind. Die Parallellenker 84 sind ihrerseits an den Seitenwänden 4 und 8 der Öfen angelenkt. Fig. 3 zeigt die untere Klappe 82 in Schließstellung und die obere Klappe 82 in Offenstellung.

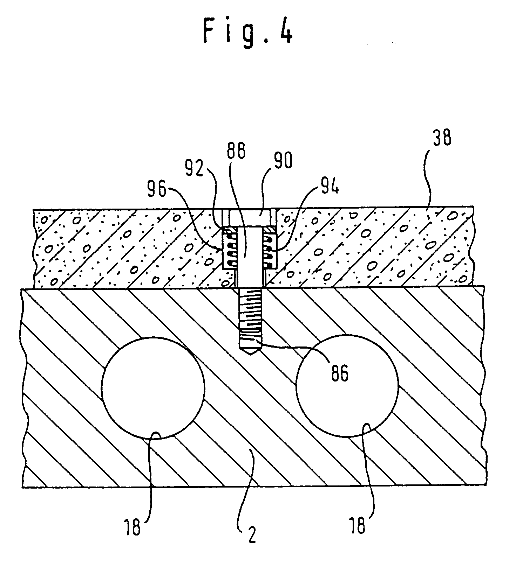

Fig. 4 zeigt einen Abschnitt der Bodenwand 2 und eine darauf lösbar befestigte Steinplatte 38. In der Bodenwand 2 befindet sich oberseitig ein Gewindesackloch 86, in das eine Schraube 88 eingeschraubt ist. Der Kopf 90 der Schraube 88 drückt über eine Ringscheibe 92 auf eine Schraubenfeder 94 in einer Sackausnehmung 96 in der Oberseite der Steinplatte 38, wodurch die Steinplatte 38 federnd nachgiebig an die Oberseite der Bodenwand 2 gedrückt wird. Die obere Begrenzungsfläche des Kopfs 90 liegt etwa in Flucht mit der oberen Begrenzungsfläche der Steinplatte 38. Die Steinplatten an den anderen Wänden des Ofens können entsprechend befestigt sein.

Fig. 5 zeigt einen Ofenraum 98 mit Seitenwänden 4, 8, einer Bodenwand 2 und einer Deckwand 12, in denen sich die schematisch dargestellten Leitungen 16, 18, 20 befinden. An den Innenseiten der Deckwand 12, der Seitenwand 4 und der Bodenwand 2 befinden sich Temperaturfühler 100, 102, 104, und im Ofenraum 98 befindet sich ein Feuchtigkeitsfühler 106 sowie ein weiterer Temperaturfühler 108. Die Temperaturfühler 100, 102, 104, 108 geben Temperatursignale über Leitungen 110 an eine Steuer- und Regeleinrichtung 112. Der Feuchtigkeitsfühler 106 gibt Feuchtigkeitssignale über Leitungen 114 an die Steuer- und Regeleinrichtung 112. Die Temperatursteuerung erfolgt über einen Abschnitt 116 in der Steuer- und Regeleinrichtung 112. Die Feuchteregelung erfolgt über einen Abschnitt 118 in der Steuer- und Regeleinrichtung 112.

Die Temperatursteuerung und -regelung erfolgt dadurch, daß von der Steuer- und Regeleinrichtung 112 über Leitungen 120 Signale an eine mechanische Thermoölsteuereinrichtung 122 gegeben werden. In diese Thermoölsteuereinrichtung 122 wird erhitztes Thermoöl über eine Leitung 124 und relativ kühles Thermoöl über eine Leitung 126 eingeführt. In den entsprechenden Leitungen 128, 130 innerhalb der Thermoölsteuereinrichtung 122 befinden sich Klappenventile 132, 134, die von einem Motor 136 entsprechend den über die Leitungen 120 zugeführten Signalen zu verstellen sind. Die Leitungen 128, 130 sind zu einer Leitung 138 zusammengeführt, die zu einem Einlaß eines Mehrwegeventils 140 führt. Von dem Mehrwegeventil 140 führen Leitungen 142, 144, 146 zu den Leitungen 16, 18, 20. Außerdem ist von dem Mehrwegeventil 140 eine Ablaßleitung 148 abgeführt. Eine Verstellung des Mehrwegeventils 140 erfolgt mittels eines Motors 150, der von den Signalen gesteuert ist, die der Thermoölsteuereinrichtung 122 über die Leitung 120 zugeführt werden.

Zur Steuerung der Feuchte in dem Ofenraum 98 ist der Ofenraum 98 an eine Dampfzuführungsleitung 152 und eine Luftzuführungsleitung 154 angeschlossen. In der Dampfzuführungsleitung 152 befindet sich ein Ventil 156, das von einem Motor 158 entsprechend Signalen, die ihm von der Steuer- und Regeleinrichtung 112 über Leitungen 160 zugeführt werden, verstellbar ist. In der Luftzuführungsleitung 154 befindet sich eine Klappe 162, die von einem Motor 164 entsprechend Signalen, die ihm über die Leitung 166 von der Steuer- und Regeleinrichtung zugeführt werden, verstellbar ist. Der Abführung von Schwaden aus dem Ofenraum 98 dient ein Saugzug (Ventilator) 168 in einer von dem Ofenraum 98 abgeführten Leitung 170. Der Saugzug 168 wird durch Signale gesteuert, die ihm von der Steuer- und Regeleinrichtung 112 über eine Leitung 172 zugeführt werden.

Eine Programmierung der Steuer- und Regeleinrichtung erfolgt mittels eines Programmiergeräts 174, an dem Temperatur-Zeitverläufe und Feuchteverläufe nach Wahl der Steuer- und Regeleinrichtung 112 über Programmierleitungen 176 vorgegeben werden können.

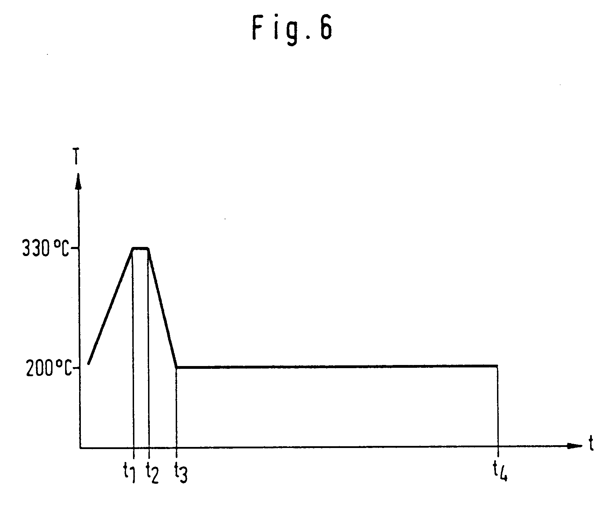

Fig. 6 zeigt die Temperatur T im Ofenraum 98 in Abhängigkeit von der Zeit t. Die Temperatur im Ofenraum 98 wird von 200°C bis 330°C aufgeheizt. Dann werden zur Zeit t₁ die Brotteiglinge in den Ofenraum eingebracht. Nach einer Zeit von etwa 5 Minuten wird ab t₂ die Temperatur auf die normale Backtemperatur von 200°C abgesenkt. Diese Temperatur wird zum Zeitpunkt t₃ erreicht und bleibt bis zum Zeitpunkt t₄ aufrechterhalten, zu dem das gebackene Brot dem Ofen entnommen wird. Die Temperatursteuerung erfolgt dabei so, wie in Zusammenhang mit Fig. 5 beschrieben.

## Patentansprüche

1. Ofen zum Backen von Brot mit wenigstens einem Backraum (98), **dadurch gekennzeichnet**, daß sich in dem Backraum (98) wenigstens ein Temperaturfühler (100, 102, 104, 108) und ein Feuchtigkeitsfühler (106) befinden, die die Temperatur im Backraum (98) und die Konzentration von Feuchtigkeit im Backraum (98) steuern.

2. Ofen nach Anspruch 1, **dadurch gekennzeichnet**, daß die Steuerung der Temperatur und der Konzentration der Feuchtigkeit unabhängig voneinander erfolgen.

3. Ofen nach Anspruch 1 oder 2, **dadurch gekennzeichnet**, daß an die Bodenwand (2), die Querseitenwände (4, 8) und die Deckwand (12) unabhängig voneinander arbeitende Temperaturfühler (100, 102, 104) angesetzt sind.

4. Ofen nach einem der vorhergehenden Ansprüche mit wenigstens einem durch eine Bodenwand (2), Seitenwände (4, 6, 8, 10) und eine Deckwand (12) begrenzten Backraum (98), **dadurch gekennzeichnet**, daß die Deckwand (12) höhenverstellbar ist.

5. Ofen nach einem der vorhergehenden Ansprüche, **dadurch gekennzeichnet**, daß die Deckwand (12) gegenüber den Seitenwänden (4, 6, 8, 10) abgedichtet ist.

6. Ofen nach Anspruch 5, **dadurch gekennzeichnet**, daß die Deckwand (12) mittels zur Höhenverstellung von den Seitenwänden (4, 6, 8, 10) abhebbaren Dichtungen (40) abgedichtet ist.

7. Ofen nach einem der vorhergehenden Ansprüche, **dadurch gekennzeichnet**, daß er wenigstens zwei übereinander angeordnete, thermisch - vorzugsweise durch Calciumsilikat-Isolierplatten - voneinander entkoppelte Backräume (98) aufweist.

8. Ofen nach einem der Ansprüche 4 bis 7, **dadurch gekennzeichnet**, daß die Bodenwand (2), die unteren Teile der Querseitenwände (4, 8) und die Deckwand (12) unabhängig voneinander - vorzugsweise durch Thermoöl - erhitzbar sind.

9. Ofen nach einem der Ansprüche 4 bis 8, **dadurch gekennzeichnet**, daß seine Bodenwand (2) und/oder wenigstens untere Bereiche seiner Seitenwände (4, 6, 8, 10) und/oder seine Deckwand (12) mit Belägen (38) aus Stein und/oder Oxidkeramik versehen sind.

10. Ofen nach Anspruch 9, **dadurch gekennzeichnet**, daß wenigstens einer der Beläge (38) an der ihm zugeordneten Wand (2, 4, 6, 8, 10, 12) austauschbar befestigt ist.

11. Verfahren zum Backen von Brot in einem Backraum (98), insbesondere in einem Ofen nach einem der vorstehenden Ansprüche, **dadurch gekennzeichnet**, daß der Backraum (98) auf eine Temperatur (z.B. 300°C) erhitzt wird, die oberhalb der Backtemperatur (z.B. 200°C) liegt, daß dann in den Backraum (98) wenigstens ein nicht vorgebackener Brotteigling eingebracht wird und daß dann nach einer vorgegebenen Zeitspanne (z.B. 5 min) die Temperatur des Backraums (98) auf die Backtemperatur abgesenkt wird.
